# EUROPÄISCHE PATENTSCHRIFT

(11) **EP 2 801 798 B1**
(45) Veröffentlichungstag und Bekanntmachung des Hinweises auf die Patenterteilung: **22.01.2020**
(21) Anmeldenummer: 13166916.0
(22) Anmeldetag: 07.05.2013
(51) Int. Cl.: G01F 23/28, A47L 15/00, A47L 15/42, A47L 15/46, G01F 23/296, G01F 23/00

(54) **FÜLLSTANDSMESSGERÄT MIT SPÜLEINRICHTUNG**
FILLING LEVEL MEASURING DEVICE WITH FLUSHING DEVICE
APPAREIL DE MESURE DU NIVEAU DE REMPLISSAGE AVEC DISPOSITIF DE RINÇAGE

(43) Veröffentlichungstag der Anmeldung: 12.11.2014
(73) Patentinhaber: VEGA Grieshaber KG, 77709 Wolfach (DE)
(72) Erfinder: LENK, Fritz, 77761 Schiltach (DE)
(74) Vertreter: Patentanwälte Bauer Vorberg Kayser

(56) Entgegenhaltungen:
- EP-A2- 1 480 021
- EP-A2- 2 202 536
- WO-A1-2006/063930
- WO-A1-2008/006391

## Beschreibung

Die vorliegende Erfindung betrifft ein Füllstandsmessgerät mit einer Spüleinrichtung zum Spülen eines Füllstandsensors nach dem Oberbegriff des Patentanspruchs 1, sowie ein Verfahren zum Spülen eines Füllstandsensors mit einem Füllstandmessgerät nach dem Oberbegriff des Anspruch 18.

Füllstandmessgeräte zur Messung des Füllstandes von Flüssigkeiten und Schüttgütern in einem Behälter sind bekannt und in der Industrie weit verbreitet. Die Auswahl des geeigneten Messverfahrens hängt im Wesentlichen davon ab, ob es sich um Flüssigkeiten oder Schüttgüter handelt.

Die Erfassung eines Füllstandgrenzwertes mit Mikrowellen beispielsweise beruht auf einem Sender-/Empfängerprinzip. Von einem Sender ausgesendete und durch ein leeres Behältnis hindurchstrahlende Mikrowellenimpulse werden vom Empfänger registriert, bei vollem Behältnis jedoch vom Medium zumindest teilweise absorbiert. Aus dem Verhältnis der gemessenen Impulsraten kann auf das Überschreiten des Grenzwertes geschlossen werden.

Radarfüllstandsmessgeräte arbeiten mit Radarsensoren. Dabei werden hochfrequente Radarimpulse von einer Antenne abgestrahlt und von der Füllgutoberfläche reflektiert. Die Laufzeit des reflektierten Radarimpulses ist direkt proportional zum zurückgelegten Weg. Bei bekannten Behältergeometrien lässt sich daraus der Füllstand berechnen.

Zur Bestimmung der Höhe eines Füllstands in einem Behälter wird der Füllstandsensor meist direkt in den Innenraum des Behälters gerichtet. Die Messungen werden durchgeführt, während der Behälter befüllt wird.

Ein bei der Messung der Füllhöhe auftretendes Problem ist dabei die Verschmutzung des Sensors durch beispielsweise Staub, der bei der Befüllung des Behälters aufgewirbelt wird und sich auf dem Sensor festsetzt. Die Füllstandmessung in Koksanlagen ist ein gutes Beispiel dafür. Solche Verschmutzungen ändern das detektierte Signal. Ist die Verschmutzung zu groß, kann das Signal nicht mehr detektiert werden und die Höhe des Füllstandes nicht mehr ermittelt werden. In solchen Fällen wird im Stand der Technik eine Fehlermeldung ausgegeben, die darauf hinweist, dass kein Signal empfangen wird. Als mögliche Fehlerursachen sind dann beispielsweise ein Defekt der Antenne, eine unterbrochene Signalleitung oder eine übermäßige Verschmutzung der Antenne angegeben.

Ein ähnliches Problem kann auch auftreten, wenn der Detektor zu heiß wird. Ein solcher Fall kann beispielsweise auftreten, wenn der Detektor in Umgebungen eingesetzt wird, in denen die Temperatur sehr hoch ist, wie dies beispielsweise in Schmelzereien der Fall ist.

Wenn der Detektor zu heiß wird, kann dies ebenfalls dazu führen, dass die Messung verfälscht und daher nicht mehr zuverlässig durchgeführt werden kann.

Aus diesen Gründen sind in beispielsweise Radarfüllstandmessgeräten häufig Spül- und/oder Kühlanschlüsse vorgesehen, mit denen der Füllstandsensor gespült bzw. gekühlt werden kann.

Die DE 10 2004 033 033.6 beispielsweise offenbart eine derartige Füllstandmessungs- Antennenanordnung für Radarfüllstandmessgeräte mit einem Leitungssystem zum Hindurchleiten eines Mediums, welches gasförmig oder flüssig sein kann, wobei die Antennenanordnung zum Zuführen eines Kühlmediums zu sich erhitzenden Komponenten der Antenne ausgebildet ist.

Derartige Füllstandmessgeräte werden meist dauernd mit einem Kühl- oder Spülfluid gespült, um Unterbrechungen zu vermeiden. Um einen unterbrechungsfreien Betrieb der Füllstandmesseinrichtung zu gewährleisten, wird daher eine große Menge an Spül- bzw. Kühlfluid verbraucht.

Aufgabe der vorliegenden Erfindung ist es daher, Füllstandmessgeräte bereitzustellen, die diese Nachteile nicht haben.

Diese Aufgabe wird gelöst durch ein Füllstandmessgerät nach Anspruch 1, sowie durch ein Verfahren zum Spülen eines Füllstandsensors nach Anspruch 21. Vorteilhafte Ausführungen sind in den Unteransprüchen offenbart.

Erfindungsgemäß weist das Füllstandmessgerät mit einer Spüleinrichtung zum Spülen eines Füllstandsensors einen Sensor zum Detektieren eines Messsignals, sowie eine mit dem Sensor verbundene Messwertermittlung zum Ermitteln eines Messwertes aus dem detektierten Messsignal auf, wobei die Messwertermittlung mit einem Komparator zum Vergleichen des ermittelten Messwertes mit einem ersten Referenzwert bei einer vorgegebenen Vergleichsbedingung verbunden ist. Der Komparator weist einen Steuersignalausgang zur Ausgabe eines Steuersignales auf und die Spüleinrichtung ist an den Steuersignalausgang so gekoppelt oder mit diesem so verbunden, dass, wenn die Vergleichsbedingung erfüllt ist, der Steuersignalausgang ein Steuersignal zum Aktivieren der Spüleinrichtung an die Spüleinrichtung übermittelt, so dass die Spüleinrichtung aktiviert wird. Somit wird nur dann gespült, wenn dies notwendig ist, was den Verbrauch an Spülfluid stark verringert.

Die Spüleinrichtung weist vorteilhafterweise eine Ventilansteuerung auf, die an den Steuersignalausgang gekoppelt oder mit diesem verbunden ist. Mit der Ventilansteuerung ist ein über diese steuerbares Ventil verbunden, welches einen ersten Anschluss für eine Fluidzuführung aufweist sowie einen zweiten Anschluss. Der zweite Anschluss ist vorteilhafterweise mit einer Spülleitung zum Spülen des Füllstandsensors verbunden, deren anderes Ende eine Spülöffnung aufweist, die beispielsweise auf den Füllstandsensor gerichtet ist oder in den Füllstandsensor integriert ist.

Vom Steuersignalausgang kann zum Öffnen des Ventiles für die Ventilansteuerung ein Steuersignal bereitgestellt werden, wenn entweder der Betrag des Messwertes niedriger ist als der Betrag des ersten vorgegebenen Referenzwertes, wobei kein Steuersignal zum Öffnen des Ventiles bereitgestellt wird, solange der Betrag des Messwertes höher ist als der Betrag des ersten Referenzwertes, oder wenn der Betrag des Messwertes höher ist als der Betrag des ersten Referenzwertes, wobei kein Steuersignal zum Öffnen des Ventiles in diesem Fall bereitgestellt wird, solange der Betrag des Messwertes kleiner ist als der Betrag des ersten Referenzwertes. Auf diese Weise kann die Vergleichsbedingung so definiert werden, dass, wenn sie wahr ist, die Spüleinrichtung aktiviert wird und wenn sie nicht wahr ist, die Spüleinrichtung nicht aktiviert wird.

Bei Füllstandmessgeräten, die über eine Fehlerausgabe verfügen, kann in einer alternativen Ausgestaltung auch der Ausgang für die Fehlerausgabe dazu verwendet werden, die Spüleinrichtung zu aktivieren. Wird ein Fehlersignal ausgegeben, welches den Benutzer auf die erforderliche Reinigung oder Kühlung des Füllstandsensors hinweist, kann dieses Fehlersignal auch gleichzeitig als Steuersignal zur Aktivierung der Spüleinrichtung verwendet werden.

Vorteilhaft ist es, dass, wenn am Steuersignalausgang das Steuersignal zum Aktivieren der Spüleinrichtung bereitgestellt wird, die Spüleinrichtung für eine vorgegebene Zeitdauer aktiviert bleibt, so dass der Füllstandsensor hinreichend lange gespült werden kann. Dadurch kann eine ausreichende Reinigung beziehungsweise Kühlung des Füllstandsensors garantiert werden.

Eine Variante sieht vor, dass, wenn die Vergleichsbedingung erfüllt ist, eine Hysterese aktiviert wird, so dass die Spüleinrichtung aktiviert bleibt, wenn sie vorher aktiviert wurde, und wenn der Messwert in einem Hysteresebereich liegt, wobei der Hysteresebereich durch den ersten Referenzwert und einen zweiten Referenzwert, welcher außerhalb des Wertebereiches liegt, in dem die Vergleichsbedingung erfüllt ist, definiert wird. So wird beispielsweise die Spüleinrichtung nach dem Aktivieren erst dann deaktiviert, wenn die Vergleichsbedingung nicht mehr erfüllt ist und gleichzeitig entweder der Betrag des Messwertes höher ist als der Betrag eines zweiten vorgegebenen Referenzwertes, welcher größer ist, als der Betrag des ersten Referenzwertes, oder wenn der Betrag des Messwertes niedriger ist als der Betrag eines zweiten vorgegebenen Referenzwertes, welcher kleiner als der Betrag des ersten Referenzwertes ist.

Die Aktivierung einer Hysterese kann ebenso wie das Vorgeben einer bestimmten Zeitdauer für den Spülvorgang dafür sorgen, dass eine ausreichende Reinigung beziehungsweise eine ausreichende Kühlung des Füllstandsensors erfolgt.

Erfindungsgemäß ist der Sensor zum Detektieren des Messsignales der Füllstandsensor selbst. Dadurch kann ein zusätzlicher Sensor, der nur für die Spülintervalle zuständig ist, entfallen.

Der Füllstandsensor ist erfindungsgemäß ein Sensor zum Empfangen und Erfassen des Echosignales eines Hochfrequenzimpulses, wobei der Messwert ein berechneter Wert aus dem erfassten Echosignal ist.

Der Messwert und/oder der erste Referenzwert kann beispielsweise eine Funktion des Signal/Rauschverhältnisses des Echosignals sein. So kann als Bedingung festgelegt werden, dass, wenn das Echosignal nicht wenigstens um einen bestimmten Faktor höher ist als das Rauschsignal, die Spüleinrichtung aktiviert wird, da dann davon ausgegangen werden kann, dass beispielsweise der Sensor verschmutzt ist oder dass die Temperatur des Sensors für die Messung zu hoch ist. Da der Füllstandsensor zur Bestimmung der Höhe eines Füllstandes in einem Behälter vorzugsweise in den Innenraum des Behälters gerichtet ist und sich daher der direkten Sichtkontrolle entzieht, kann über die Änderung des detektierten Signales auf den Verschmutzungsgrad oder auf die Temperatur des Füllstandsensors geschlossen werden.

Das Signal/Rauschverhältnis, auch Störabstand oder Signalrauschabstand genannt, ist ein Maß für die technische Qualität eines Nutzsignales, das von einem Rauschsignal überlagert ist. Es ist definiert als das Verhältnis der mittleren Leistung des Nutzsignales zur mittleren Rauschleistung des Störsignales.

Der erste Referenzwert kann alternativ oder zusätzlich auch beispielsweise als eine Funktion der Amplitude des ausgesendeten Hochfrequenzimpulses bestimmt werden. So kann beispielsweise gefordert werden, dass die Amplitude des Echosignales wenigstens ein bestimmter Prozentsatz der Amplitude des ausgesendeten Hochfrequenzimpulses sein soll. Ist dies nicht der Fall, kann dann der Spülvorgang eingeleitet werden. Eine solche Relation bewirkt eine Kopplung des ersten Referenzwertes an die Signalstärke eines ausgesendeten Hochfrequenzimpulses. Damit kann beispielsweise ausgeschlossen werden, dass die Aktivierung der Spüleinrichtung dadurch verhindert wird, dass der Hochfrequenzimpuls mit einer höheren Leistung ausgesendet wird.

Auch ist es möglich, dass der erste Referenzwert und/oder der zweite Referenzwert durch den zeitlichen Abstand zwischen Hochfrequenzimpuls und Echosignal bestimmt wird. So kann abhängig von der Füllhöhe des Behälters ein Referenzwert festgelegt werden. Der erste Referenzwert kann dabei einer Wertetabelle entnommen werden, die beispielsweise vorher festgelegt worden ist als Funktion der Füllhöhe des Behälters. Dies ist in all den Fällen sinnvoll, in denen die Amplitude des Echosignales stark mit der Füllhöhe des Behälters korreliert ist.

Eine alternative Möglichkeit, den ersten und/oder zweiten Referenzwert festzulegen, ist es beispielsweise, die Amplitude des empfangenen Echosignales zum Zeitpunkt der Inbetriebnahme des Füllstandmessgerätes zu bestimmen undbeispielsweise die dazugehörende Echokurve mit ihren Werten abzuspeichern. Der erste und/oder zweite Referenzwert kann dann auf die abgespeicherte Echokurve oder auf die bestimmte Amplitude des empfangenen Echosignales zum Zeitpunkt der Inbetriebnahme bezogen werden. Der erste Referenzwert und/oder der zweite Referenzwert kann so beispielsweise ein aus einer abgespeicherten Referenzechokurve ermittelter Wert sein. Sofern davon ausgegangen werden kann, dass zum Zeitpunkt der Inbetriebnahme der Füllstandsensor nicht verschmutzt ist, kann aus einer Änderung der Messwerte gegenüber den abgespeicherten Werten damit auf den Verschmutzungsgrad des Füllstandsensors rückgeschlossen werden.

Der Sensor kann in einer nicht zur vorliegenden Erfindung gehörenden Ausführungsform auch ein Temperatursensor zur Messung der Temperatur des Füllstandsensors sein. Der Messwert ist dann vorteilhafterweise ein Temperaturmesswert und der erste Referenzwert ein erster Temperaturgrenzwert. Am Steuersignalausgang wird dann ein Steuersignal bereitgestellt, wenn der Temperaturmesswert größer ist als der erste Temperaturgrenzwert. Dadurch wird die Spüleinrichtung aktiviert. Wenn die gemessene Temperatur dann einen vorgegebenen zweiten Temperaturgrenzwert, welcher kleiner oder höchstens gleich dem ersten Temperaturgrenzwert ist, unterschreitet, kann die Spüleinrichtung beispielsweise wieder deaktiviert werden.

Das Fluid zum Reinigen und/oder Kühlen des Füllstandsensors ist vorzugsweise gasförmig, beispielsweise Stickstoff, Luft oder ein Edelgas. Es kann sich dabei aber auch um eine rasch verdunstende Flüssigkeit handeln. Wichtig ist dabei jedoch, dass das verwendete Fluid keine Rückstände auf dem Füllstandsensor hinterläßt. Das Fluid kann ein Kühlfluid zum Kühlen des Füllstandsensors sein oder auch ein Reinigungsfluid zum Reinigen des Füllstandsensors. Das Spülventil kann direkt mit dem Füllstandmessgerät verbunden sein oder in das Füllstandmessgerät integriert sein. Der Steuersignalausgang kann über eine drahtlose Verbindung zur Übertragung des Steuersignals an die Spüleinrichtung gekoppelt sein oder er kann auch direkt mit der Spüleinrichtung verbunden sein.

Um eine gründliche Spülung durchzuführen, können, wenn die Vergleichsbedingung erfüllt ist, auch mehrere Spülintervalle vorgesehen sein, wobei vorzugsweise die Dauer jedes einzelnen Spülintervalles und/oder die Dauer der Zeitintervalle zwischen den Spülintervallen vorgegeben sein kann. Auch die Anzahl der vorgegebenen Spülintervalle kann vorbestimmt sein.

Wenn die Vergleichsbedingung beispielsweise nach einer vorgegebenen Anzahl von Spülintervallen oder nach einer vorgegebenen Spüldauer immer noch erfüllt ist, kann auch eine Fehlermeldung ausgegeben werden und die Spüleinrichtung kann trotz erfüllter Vergleichsbedingung deaktiviert werden.

Zur Optimierung der Ergebnisse können darüber hinaus noch zusätzliche Spülintervalle zum Spülen des Füllstandsensors vorgesehen sein, die beispielsweise unabhängig vom Vorliegen oder Nichtvorliegen der Vergleichsbedingung durchgeführt werden oder die abhängig vom zeitlichen Abstand zwischen dem Vorliegen der Vergleichsbedingung zu früheren Zeitpunkten durchgeführt werden können.

Das Verfahren zum Spülen eines Füllstandsensors kann folgendermaßen durchgeführt werden: Nachdem ein erster Referenzwert vorgegeben ist, wird ein Signal mit dem Sensor gemessen. Aus dem Signal wird dann ein Messwert ermittelt. Danach wird der Messwert mit dem ersten Referenzwert verglichen und, wenn die vorgegebene Vergleichsbedingung erfüllt ist, die Spüleinrichtung aktiviert und der Füllstandsensor gespült. Vor oder während dieses Verfahrens kann ein zweiter Referenzwert ermittelt oder vorgegeben werden. Nach dem Vergleichen des Messwertes mit dem ersten Referenzwert kann überprüft werden, ob die Spüleinrichtung aktiviert oder deaktiviert ist, wobei, wenn die Spüleinrichtung aktiviert ist, der Messwert mit dem zweiten Referenzwert verglichen wird.

Die aktivierte Spüleinrichtung wird vorzugsweise deaktiviert, wenn die Vergleichsbedingung nicht mehr erfüllt ist und gleichzeitig entweder der Betrag des Messwertes den Betrag des zweiten Referenzwertes überschreitet, sofern der Betrag des zweiten Referenzwertes größer oder gleich dem Betrag des ersten Referenzwertes ist, oder, wenn der Betrag des ersten Messwertes den Betrag des zweiten Referenzwertes unterschreitet, sofern der Betrag des zweiten Referenzwertes kleiner oder gleich dem Betrag des ersten Referenzwertes ist, oder wenn ein vorgegebenes Zeitintervall seit Aktivieren der Spüleinrichtung abgelaufen ist.

Die aktivierte Spüleinrichtung wird deaktiviert, sobald der Steuersignalausgang ein Steuersignal bereitstellt, mit welchem die Spüleinrichtung deaktiviert wird oder wenn der Steuersignalausgang kein Steuersignal zum Aktivieren der Spüleinrichtung mehr bereitstellt.

Die Erfindung wird nachfolgend anhand von Zeichnungen näher beschrieben.

Die in der nachfolgenden Beschreibung verwendeten Bezeichnungen wie "oben", "unten", "links" und "rechts" und ähnliches beziehen sich auf die Figuren und sollen in keiner Weise einschränkend sein, auch dann nicht, wenn sie sich auf bevorzugte Ausführungsformen beziehen.

In den Zeichnungen zeigen:
- Fig. 1: eine schematische Darstellung eines Füllstandsensors mit einer Spüleinrichtung,
- Fig. 2: einen typischen Verlauf des Signales eines Radarfüllstandmessgerätes und
- Fig. 3: einen Verlauf eines Verfahrens zum Spülen eines Füllstandsensors.

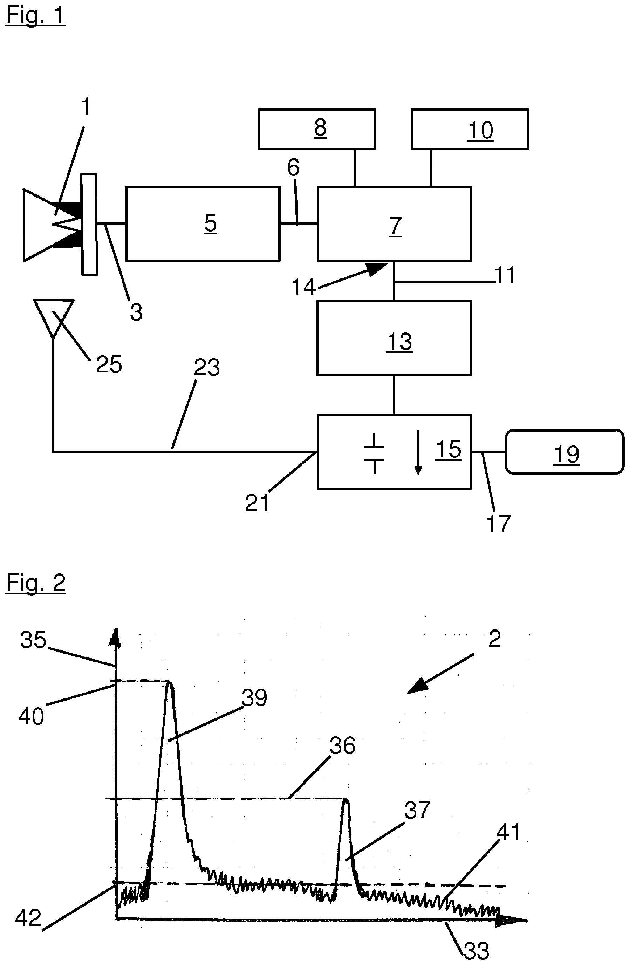

Figur 1 zeigt in schematischer Darstellung eine Radarantennenspüleinrichtung mit einem Füllstandsensor 1, der über eine Signalleitung 3 mit einer Messwertermittlung 5 verbunden ist, in welchem aus einem Messsignal 2 ein Messwert 6 ermittelt wird. Der Messwert 6 wird an eine Speicher- und Vergleichseinheit 7 übermittelt, auch Komparator genannt. Der Komparator 7 weist einen ersten Eingang für einen ersten Referenzwert 8 auf, sowie einen weiteren Eingang für einen zweiten Referenzwert 10 sowie einen Steuersignalausgang 11, der mit einer Ventilansteuerung 13 verbunden ist.

Im Komparator 7 wird der Messwert 6 mit dem ersten Referenzwert 8 verglichen und abhängig davon, ob eine vorgegebene Vergleichsbedingung erfüllt ist oder nicht, am Steuersignalausgang 11 ein Steuersignal 14 für die Ansteuerung eines Ventiles 15 an die Ventilansteuerung 13 bereitgestellt.

Damit ein Ventil 15 angesteuert werden kann, ist die Ventilansteuerung 13 direkt mit dem Ventil 15 verbunden. Das Ventil 15 ist ein Ventil mit zwei Betriebszuständen, nämlich dem Betriebszustand "offen" und dem Betriebszustand "geschlossen". Das Ventil 15 weist einen ersten Anschluss 17 für die Zuführung eines Fluids 19 auf, sowie einen zweiten Anschluss 21, der mit einer Spülleitung 23 verbunden ist. Das nicht am Ventil 15 angeschlossene Ende der Spülleitung 23 weist eine Spülöffnung 25 auf. Wenn nun vom Steuersignalausgang 11 ein Steuersignal 14 über die Ventilansteuerung 13 an das Ventil 15 übermittelt wird, wird das Ventil 15 geöffnet und das Fluid 19 kann über den ersten Anschluss 17 und den zweiten Anschluss 21 direkt in die Spülleitung 23 gelangen und über die Spülöffnung 25, die auf den Füllstandsensor 1 gerichtet ist, den Füllstandsensor 1 mit dem Fluid 19 spülen. Das Fluid 19, welches beispielsweise Stickstoff, Luft oder ein Edelgas sein kann, kann auf diese Weise den Füllstandsensor 1 bei Bedarf reinigen oder kühlen. Die Spülöffnung 25 der Spülleitung 23 kann natürlich auch eine im Füllstandsensor 1 integrierte Öffnung sein, das heißt, die Spülleitung 23 kann direkt mit dem Füllstandsensor 1 verbunden sein oder auch ein Teil von ihm sein.

Der Füllstandsensor 1 im hier beschriebenen Beispiel ist ein Radarfüllstandsensor. Er kann natürlich auch beispielsweise ein Ultraschallsensor sein, bei welchem die Laufzeitmessung auf der Messung mit Ultraschall beruht. Die Signalleitung 3 kann in einer nicht zur vorliegenden Erfindung gehörenden Ausführungsform auch, anstatt mit dem Füllstandsensor 1 direkt, mit einem Temperatursensor 31, welcher die Temperatur des Füllstandsensors 1 misst, verbunden sein.

Figur 2 zeigt ein typisches Messsignal 2 eines Radarfüllstandsensors 1. In der Darstellung ist die X-Achse als Zeitachse 33 gewählt und die Y-Achse als Amplitudenachse 35. Für die Ermittlung des Messwertes 6 kann beispielsweise die Amplitude 36 des vom Füllstandsensor 1 empfangenen Echosignales 37, welches zeitverzögert zum ausgesendeten Hochfrequenzimpuls 39 auf den Füllstandsensor 1 trifft, ermittelt werden. Die Amplitude 40 des Hochfrequenzimpulses 39 kann vorteilhafterweise vom Füllstandsensor 1 detektiert werden und beispielsweise zur Bestimmung des ersten Referenzwertes 8 verwendet werden. Der Füllstandsensor 1 weist vorteilhafterweise auch Mittel zum Aussenden des Hochfrequenzimpulses auf. Das Messsignal 2 weist ein Rauschen 41 auf, aus welchem ein Rauschsignalwert 42 ermittelt werden kann, der ebenfalls als Basis zur Ermittlung des ersten Referenzwertes 8 verwendet werden kann.

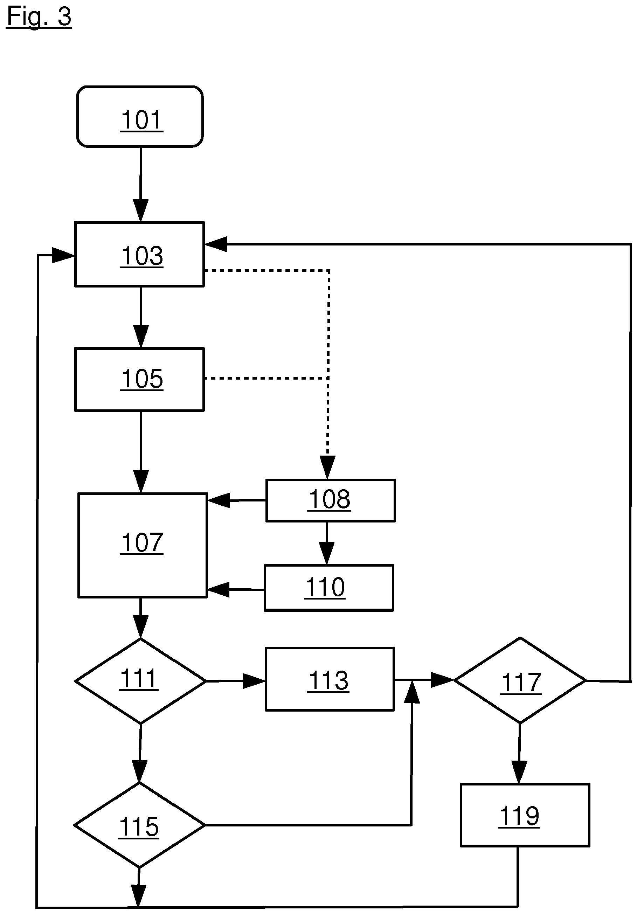

Figur 3 zeigt ein Diagramm zur Erläuterung der Funktionsweise einer Radarantennenspüleinrichtung. Nach dem Start der Messungen in Startblock 101 wird das Sensorsignal in Empfangsblock 103 erfasst und in dem Signalumwandlungsblock 105 in einen Messwert umgewandelt. Der ermittelte Messwert aus Block 105 wird in Speicherblock 107 gespeichert.

Aus dem im Erfassungsblock 103 erfassten Sensorsignal wird zudem in Block 108 der erste Referenzwert 8 ermittelt und dieser Wert in Block 107 ebenfalls gespeichert. Der zweite Referenzwert 10 wird aus dem ersten Referenzwert 8 in Block 110 ermittelt. Im vorliegenden Beispiel soll der zweite Referenzwert 10 größer als der erste Referenzwert 8 sein. Der zweite Referenzwert 10 wird ebenfalls in Block 107 gespeichert. Nun werden die gespeicherten Werte an eine erste Vergleichseinheit 111 weitergeleitet und es wird eine erste Vergleichsbedingung abgefragt. Im vorliegenden Beispiel soll in der Vergleichseinheit 111 der Messwert 6 mit dem ersten Referenzwert 8 verglichen werden und es soll überprüft werden, ob der Messwert 6 kleiner als der erste Referenzwert 8 ist. Ist diese Vergleichsbedingung erfüllt, wird in Block 113 der Befehl zum Öffnen des Ventiles 15 gegeben. Ist die Vergleichsbedingung nicht erfüllt, wird in Ventilprüfblock 115 überprüft, ob das Ventil 15 geschlossen ist.

Ist Ventil 15 geschlossen, wird das nächste Sensorsignal in Erfassungsblock 103 erfasst. Ist Ventil 15 nicht geschlossen, wird in einer zweiten Vergleichseinheit 117 überprüft, ob der Messwert größer ist als der zweite Referenzwert 10. Ist diese Vergleichsbedingung erfüllt, wird ein Befehl zum Schließen des Ventiles gegeben (Block 119), und das Ventil 15 wird geschlossen. Dann wird im Erfassungsblock 103 das nächste Sensorsignal erfasst.

Ist die zweite Vergleichsbedingung (Messwert größer zweiter Referenzwert 10) nicht erfüllt, wird keine weitere Aktion unternommen und der nächste Sensorsignalwert im Erfassungsblock 103 erfasst. Auch wenn der Befehl zum Öffnen des Ventiles in Block 113 gegeben wurde, wird überprüft, ob die zweite Vergleichsbedingung erfüllt ist und entsprechend verfahren.

Im soeben beschriebenen Beispiel war der Sensor, dessen Signal in Block 103 erfasst wurde, der Füllstandsensor 1. Die erste Vergleichsbedingung war die Abfrage, ob der Messwert kleiner ist als der erste Referenzwert 8.

In einer nicht zur vorliegenden Erfindung gehörenden Ausführungsform kann das zu erfassende Sensorsignal natürlich auch von einem Temperatursensor 31 kommen, welcher beispielsweise mit dem Füllstandsensor 1 in Verbindung steht und direkt die Temperatur des Füllstandsensors 1 misst. Der Ablauf kann dann beispielsweise folgendermaßen aussehen:

Nach dem Start der Messung (Block 101) wird ein Sensorsignal von einem Temperatursensor 31 im Erfassungsblock 103 erfasst und im Signalumwandlungsblock 105 in einen Messwert umgewandelt. Der Messwert wird in den Speicherblock 107 gespeichert.

Über Block 108 wird ein erster Referenzwert 8, welcher in diesem Fall ein erster Temperaturgrenzwert ist, eingegeben und in den Speicherblock 107 eingespeichert. Aus der Größe des ersten Temperaturgrenzwertes in Block 108 wird ein zweiter Referenzwert 10, welcher in diesem Fall ein zweiter Temperaturgrenzwert ist, in Block 110 ermittelt. Der zweite Referenzwert 10 soll in diesem Beispiel kleiner als der erste Temperaturgrenzwert sein. Der zweite Referenzwert 10 in Block 110 wird ebenfalls in Block 107 gespeichert.

Nun wird in der ersten Vergleichseinheit 111 überprüft, ob der Messwert größer ist, als der erste Temperaturgrenzwert. Ist dies der Fall, wird der Befehl zum Öffnen des Ventils 15 in Block 113 gegeben. Ventil 15 wird geöffnet und das Fluid 19 gelangt über die Spülleitung 23 und die Spülöffnung 25 auf den Füllstandsensor 1, um diesen zu spülen.

Ist der Messwert nicht größer, als der erste Temperaturgrenzwert 8, wird über den Ventilprüfblock 115 abgefragt, ob das Ventil geschlossen oder offen ist. Wenn das Ventil geschlossen ist, wird das nächste Sensorsignal erfasst. Wenn das Ventil nicht geschlossen ist, wird in der zweiten Vergleichseinheit 117 überprüft, ob der Messwert kleiner ist als der zweite Temperaturgrenzwert. Ist dies der Fall, wird das Ventil (Block 119) geschlossen und das nächste Sensorsignal im Erfassungsblock 103 erfasst. Ist der Messwert nicht kleiner als der zweite Referenzwert, wird keine weitere Aktion unternommen und das nächste Signal in Erfassungsblock 103 gleich erfasst.

Auf diese Weise kann gewährleistet werden, dass ein Ventil, welches geöffnet wurde, wenn ein erster Temperaturgrenzwert überschritten worden ist, erst dann wieder geschlossen wird, wenn ein zweiter Temperaturgrenzwert, welcher kleiner ist, als der erste Temperaturgrenzwert, unterschritten worden ist. An den Temperaturbereich, in welchem das Ventil geöffnet und die Spülung somit aktiviert ist, schließt sich somit ein sogenannter Hysteresebereich an, der die Spülung erst dann wieder abschaltet, wenn der zweite Temperaturgrenzwert unterschritten ist. Dadurch wird auch ein zu häufiges Schalten des Ventils 15, welches den Verschleiß fördert, vermieden.

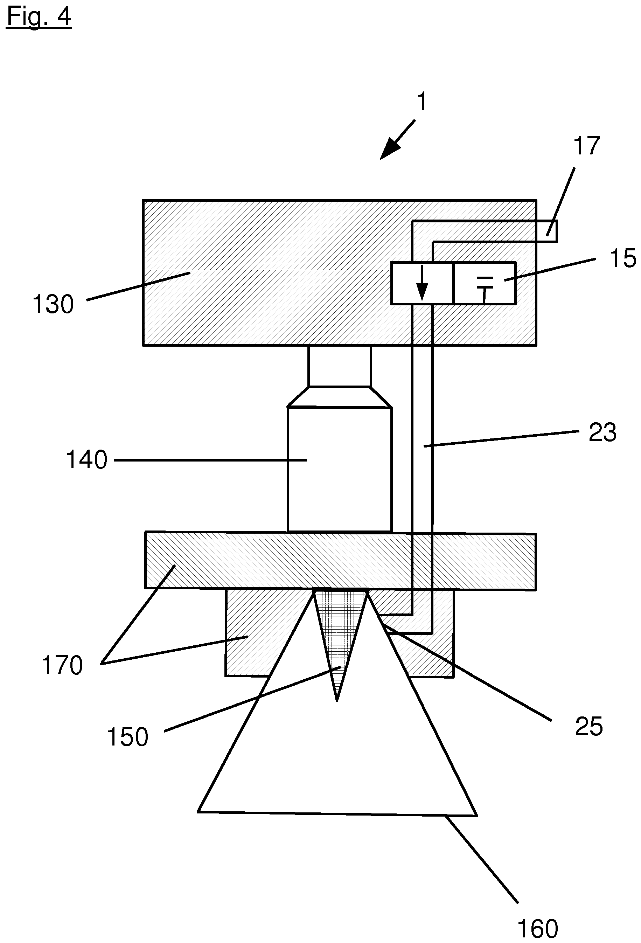

Figur 4 zeigt einen Füllstandsensor 1 mit integrierter Spüleinrichtung. Eine Sende/Empfangseinheit 130 koppelt über einen Hohlleiter 140 als Sendesignal einen Hochfrequenzimpuls 39 aus, welcher über eine Antenne 150 und einen Hornstrahler 160 in eine Richtung senkrecht nach unten abgestrahlt wird. Der Echoimpuls 37 wird nach einer bestimmten Laufzeit vom Hornstrahler 160 und der Antenne 150 empfangen und über den Hohlleiter 140 an die Sende/Empfangseinheit 130 weitergeleitet und dort ausgewertet.

Die Antenne 150 und der Hornstrahler 160 können über eine Spülöffnung 25, die mit einer durch eine Antennenhalterung 170 hindurchgeführten Spülleitung 23 verbunden ist, gekühlt oder gereinigt werden. Die Spülleitung 23 ist mit dem ersten Anschluss 17 zum Anschließen eines Fluid 19 über das mit der Ventilansteuerung 13 ansteuerbare Ventil 15 verbunden. Der erste Anschluss 17 kann beispielsweise an dem die Sende/Empfangseinheit 130 beinhaltenden Gehäuse angeschlossen werden. Auch das Ventil 15 kann in diesem Gehäuse untergebracht sein oder es kann fest auch mit einem anderen Teil des Füllstandsensors 1 verbunden sein.

Wenn der Füllstandsensor 1 gespült werden soll, kann das Ventil 15 über die Ventilsteuerung 13 mit dem Steuersignal 14 angesteuert werden, so dass das Ventil 15 öffnet und das am ersten Anschluss 17 angeschlossene Fluid 19 über das Ventil 15 und die Spülleitung 23 zur Spülöffnung 25 strömt und die Antenne 150 und / oder den Hornstrahler 160 spült. Wenn die Spülung beendet ist, wird das Ventil 15 geschlossen und der Fluidstrom unterbrochen. Auf diese Weise kann bewirkt werden, dass nur dann gespült wird, wenn dies erforderlich ist.

Die Erfindung wurde anhand bevorzugter Ausführungsbeispiele erläutert. Zudem ist es möglich, dass anstatt eines zweiten Referenzwertes für die Abfrage in der zweiten Vergleichseinheit 117 beispielsweise überprüft wird, ob eine bestimmte Zeitdauer seit Öffnen des Ventiles vergangen ist, und wenn diese Zeitdauer vergangen ist, das geöffnete Ventil wieder geschlossen wird.

### Bezugszeichenliste

- 1: Füllstandsensor
- 2: Messsignal
- 3: Signalleitung
- 5: Messwertermittlung
- 6: Messwert

- 7: Komparator
- 8: erster Referenzwert
- 10: zweiter Referenzwert
- 11: Steuersignalausgang
- 13: Ventilansteuerung
- 14: Steuersignal

- 15: Ventil
- 17: erster Anschluss
- 19: Fluid
- 21: zweiter Anschluss
- 23: Spülleitung
- 25: Spülöffnung
- 31: Temperatursensor

- 33: Zeitachse
- 35: Amplitudenachse
- 36: Amplitude des Echosignales
- 37: Echoimpuls
- 39: Hochfrequenzimpuls
- 40: Amplitude des Hochfrequenzimpulses
- 41: Rauschsignal
- 42: Rauschsignalwert
- 101: Startblock
- 103: Erfassungsblock
- 105: Signalumwandlungsblock
- 107: Speicherblock
- 108: erster Referenzwertblock
- 110: zweiter Referenzwertblock
- 111: erste Vergleichseinheit
- 113: Ventil "öffnen"
- 115: Ventilprüfblock
- 117: zweite Vergleichseinheit
- 119: Ventil "schließen"

- 130: Sende/Empfangseinheit
- 140: Hohlleiter
- 150: Antenne
- 160: Hornstrahler
- 170: Antennenhalterung

## Patentansprüche

1. Füllstandmessgerät aufweisend
- eine Spüleinrichtung (13, 15, 17, 19, 21, 23, 25) zum Spülen eines Füllstandsensors, (1),
- einen Sensor (1) zum Detektieren eines Messsignals,
- eine mit dem Sensor verbundene Messwertermittlung (5) zum Ermitteln eines Messwertes aus dem detektierten Messsignal, sowie
- einen Komparator (7), der einen Steuersignalausgang (11) zur Ausgabe eines Steuersignals aufweist, wobei
die Messwertermittlung mit dem Komparator, zum Vergleichen des ermittelten Messwertes mit einem ersten Referenzwert (8) bei einer vorgegebenen Vergleichsbedingung, verbunden ist, wobei
der Sensor der Füllstandsensor ist, der Füllstandsensor ein Sensor zum Empfangen und Erfassen des Echosignals eines Hochfrequenzimpulses ist,
**dadurch gekennzeichnet, dass**
der Messwert ein berechneter Wert aus dem erfassten Echosignal ist, und die Spüleinrichtung an den Steuersignalausgang so gekoppelt, oder mit diesem so verbunden ist, dass, wenn die vorgegebene Vergleichsbedingung erfüllt ist, der Steuersignalausgang ein Steuersignal zum Aktivieren der Spüleinrichtung an die Spüleinrichtung übermittelt, so dass die Spüleinrichtung aktiviert und der Füllstandsensor gespült wird.

2. Füllstandmessgerät nach Anspruch 1,
**dadurch gekennzeichnet, dass**
wenn am Steuersignalausgang das Steuersignal zum Aktivieren der Spüleinrichtung bereitgestellt ist, die Spüleinrichtung für eine vorgegebene Zeitdauer aktiviert bleibt.

3. Füllstandmessgerät nach Anspruch 1,
**dadurch gekennzeichnet, dass**,
wenn die Vergleichsbedingung erfüllt ist, eine Hysterese, aktiviert wird, so dass die Spüleinrichtung aktiviert bleibt, wenn der Messwert in einem Hysteresebereich liegt, wobei der Hysteresebereich durch den ersten Referenzwert und einen zweiten Referenzwert (10), welcher außerhalb des Wertebereichs liegt, in dem die Vergleichsbedingung erfüllt ist, definiert ist.

4. Füllstandmessgerät nach einem der vorigen Ansprüche,
**dadurch gekennzeichnet, dass**
der Messwert und/oder der erste Referenzwert eine Funktion des Signal/Rauschverhältnisses des Echosignals ist.

5. Füllstandmessgerät nach einem der vorigen Ansprüche,
**dadurch gekennzeichnet, dass**
der erste Referenzwert eine Funktion der Amplitude des ausgesendeten Hochfrequenzimpulses ist.

6. Füllstandmessgerät nach einem der vorigen Ansprüche,
**dadurch gekennzeichnet, dass**
der erste Referenzwert und/oder der zweite Referenzwert durch den zeitlichen Abstand zwischen Hochfrequenzimpuls und Echosignal bestimmt ist.

7. Füllstandmessgerät nach einem der vorigen Ansprüche,
**dadurch gekennzeichnet, dass**
der erste Referenzwert und / oder der zweite Referenzwert aus der Amplitude des empfangenen Echosignals zum Zeitpunkt der Inbetriebnahme des Füllstandmessgeräts bestimmt ist.

8. Füllstandmessgerät nach einem der vorigen Ansprüche,
**dadurch gekennzeichnet, dass**
der erste Referenzwert und / oder der zweite Referenzwert ein aus einer abgespeicherten Referenzechokurve ermittelter Wert ist.

9. Füllstandmessgerät nach einem der vorigen Ansprüche,
**dadurch gekennzeichnet, dass**
das Fluid gasförmig, vorzugsweise Stickstoff, Luft oder ein Edelgas ist.

10. Füllstandmessgerät nach einem der vorigen Ansprüche,
**dadurch gekennzeichnet, dass**
das Fluid ein Kühlfluid zum Kühlen des Füllstandsensors oder ein Reinigungsfluid zum Reinigen des Füllstandsensors ist.

11. Füllstandmessgerät nach einem der vorigen Ansprüche,
**dadurch gekennzeichnet, dass**
ein Spülventil in das Füllstandmessgerät integriert ist.

12. Füllstandmessgerät nach einem der vorigen Ansprüche,
**dadurch gekennzeichnet, dass**
der Steuersignalausgang über eine drahtlose Verbindung zur Übertragung des Steuersignals an die Spüleinrichtung gekoppelt ist.

13. Füllstandmessgerät nach einem der vorigen Ansprüche,
**dadurch gekennzeichnet, dass**
wenn die Vergleichsbedingung erfüllt ist, mehrere Spülintervalle vorgesehen sind, wobei vorzugsweise die Dauer jedes einzelnen Spülintervalls und/oder die Dauer der Zeitintervalle zwischen den Spülintervallen vorgegeben sind/ist.

14. Füllstandmessgerät nach einem der vorigen Ansprüche,
**dadurch gekennzeichnet, dass**,
wenn die Vergleichsbedingung nach einer vorgegebenen Anzahl von Spülintervallen oder nach einer vorgegebenen Spüldauer immer noch erfüllt ist, die Spüleinrichtung deaktiviert wird und eine Fehlermeldung ausgegeben wird.

15. Füllstandmessgerät nach einem der vorigen Ansprüche,
**dadurch gekennzeichnet, dass**
zusätzliche Spülintervalle zum Spülen des Füllstandsensors vorgesehen sind, wobei die Dauer des Spülens vorzugsweise vorgegeben ist.

16. Füllstandmessgerät nach einem der vorigen Ansprüche,
**dadurch gekennzeichnet, dass**
das Füllstandmessgerät einen Ausgang für eine Fehlerausgabe aufweist, über den ein Fehlersignal ausgegeben werden kann, welches auf eine erforderliche Reinigung oder Kühlung des Füllstandsensors hinweist.

17. Füllstandmessgerät nach Anspruch 16,
**dadurch gekennzeichnet, dass**
das Fehlersignal als Steuersignal zur Aktivierung der Spüleinrichtung verwendet wird.

18. Verfahren zum Spülen eines Füllstandsensors mit einem Füllstandmessgerät nach einem der vorigen Ansprüche,
**dadurch gekennzeichnet, dass**
die folgenden Verfahrensschritte durchgeführt werden:
a) Vorgeben eines ersten Referenzwertes
b) Messen eines Signals mit einem Sensor,
c) Ermitteln eines Messwerts aus dem Signal,
d) Vergleichen des Messwerts mit dem ersten Referenzwert,
e) Spülen des Füllstandsensors wenn eine Vergleichsbedingung erfüllt ist.

19. Verfahren nach Anspruch 18,
**dadurch gekennzeichnet, dass**
ein zweiter Referenzwert ermittelt wird.

20. Verfahren nach Anspruch 19,
**dadurch gekennzeichnet, dass**
nach dem Vergleichen des Messwerts mit dem ersten Referenzwert überprüft wird, ob die Spüleinrichtung aktiviert oder deaktiviert ist, wobei, wenn die Spüleinrichtung aktiviert ist, der Messwert mit dem zweiten Referenzwert verglichen wird.

21. Verfahren nach einem der Ansprüche 18 bis 20,
**dadurch gekennzeichnet, dass**
die Spüleinrichtung deaktiviert wird, wenn die Vergleichsbedingung nicht erfüllt ist und entweder der Betrag des Messwerts den Betrag des zweiten Referenzwerts überschreitet, sofern der Betrag des zweiten Referenzwerts größer oder gleich dem Betrag des ersten Referenzwerts ist, oder, wenn der Betrag des ersten Messwerts den Betrag des zweiten Referenzwerts unterschreitet, sofern der Betrag des zweiten Referenzwerts kleiner oder gleich dem Betrag des ersten Referenzwerts ist, oder wenn ein vorgegebenes Zeitintervall seit Aktivieren der Spüleinrichtung abgelaufen ist.

22. Verfahren nach einem der Ansprüche 18 bis 21,
**dadurch gekennzeichnet, dass**
die aktivierte Spüleinrichtung deaktiviert wird, wenn der Steuersignalausgang ein Steuersignal bereitstellt, mit welchem die Spüleinrichtung deaktiviert wird, oder wenn der Steuersignalausgang kein Steuersignal bereitstellt.

## Claims

1. A filling level measuring device, comprising
- a rinsing device (13, 15, 17, 19, 21, 23, 25) for rinsing a filling level sensor (1),
- a sensor (1) for detecting a measurement signal,
- a measured value determining unit (5), which is connected to the sensor, for determining a measured value from the detected measuring signal, and
- a comparator (7) having a control signal output (11) for outputting a control signal, wherein
the measured value determining unit is connected to the comparator for comparing the determined measured value to a first reference value (8) at a predetermined comparison condition, wherein
the sensor is the filling level sensor, the filling level sensor is a sensor for receiving and detecting the echo signal of a high-frequency pulse,
**characterized in that**
the measured value is a value calculated from the detected echo signal, and the rinsing device is coupled or connected to the control signal output in such a way that, if the predetermined comparison condition is fulfilled, the control signal output transmits a control signal for activating the rinsing device to the rinsing device, so that the rinsing device is activated and the filling level sensor rinsed.

2. The filling level measuring device according to claim 1,
**characterized in that**
the rinsing device remains activated for a predetermined period of time if the control signal for activating the rinsing device is provided at the control signal output.

3. The filling level measuring device according to claim 1,
**characterized in that**,
if the comparison condition is fulfilled, a hysteresis is activated, so that the rinsing device remains activated if the measured value is within a hysteresis range, the hysteresis range being defined by the first reference value and a second reference value (10), which is outside the value range in which the comparison condition is fulfilled.

4. The filling level measuring device according to any one of the preceding claims,
**characterized in that**
the measured value and/or the first reference value are a function of the signal-to-noise ratio of the echo signal.

5. The filling level measuring device according to any one of the preceding claims,
**characterized in that**
the first reference value is a function of the amplitude of the emitted high-frequency pulse.

6. The filling level measuring device according to any one of the preceding claims,
**characterized in that**
the first reference value and/or the second reference value are determined by the interval between the high-frequency pulse and the echo signal.

7. The filling level measuring device according to any one of the preceding claims,
**characterized in that**
the first reference value and/or the second reference value are determined from the amplitude of the received echo signal at the time of the start-up of the filling level measuring device.

8. The filling level measuring device according to any one of the preceding claims,
**characterized in that**
the first reference value and/or the second reference value are a value determined from a stored reference echo curve.

9. The filling level measuring device according to any one of the preceding claims,
**characterized in that**
the fluid is gaseous, preferably nitrogen, air or a noble gas.

10. The filling level measuring device according to any one of the preceding claims,
**characterized in that**
the fluid is a cooling fluid for cooling the filling level sensor or a cleaning fluid for cleaning the filling level sensor.

11. The filling level measuring device according to any one of the preceding claims,
**characterized in that**
the rinsing valve is integrated into the filling level measuring device.

12. The filling level measuring device according to any one of the preceding claims,
**characterized in that**
the control signal output is coupled to the rinsing device via a wireless link for transmitting the control signal.

13. The filling level measuring device according to any one of the preceding claims,
**characterized in that**
several rinsing intervals are provided if the comparison condition is fulfilled, wherein the duration of each individual rinsing interval and/or the duration of the intervals between the rinsing intervals are/is preferably predetermined.

14. The filling level measuring device according to any one of the preceding claims,
**characterized in that**,
the rinsing device is deactivated and an error message is output if the comparison condition is still fulfilled after a predetermined number of rinsing intervals or after a predetermined rinsing period.

15. The filling level measuring device according to any one of the preceding claims,
**characterized in that**
additional rinsing intervals for rinsing the filling level sensor are provided, wherein the duration of rinsing is preferably predetermined.

16. The filling level measuring device according to any one of the preceding claims,
**characterized in that**
the filling level measuring device has an output for an error output, via which an error signal can be output that indicates a required cleaning or cooling of the filling level sensor.

17. The filling level measuring device according to claim 16,
**characterized in that**
the error signal is used as a control signal for activating the rinsing device.

18. A method for rinsing a filling level sensor with a filling level measuring device according to any one of the preceding claims,
**characterized in that**
the following process steps are carried out:
a) predetermining a first reference value,
b) measuring a signal with a sensor,
c) determining a measured value from the signal,
d) comparing the measured value with the first reference value,
e) rinsing the filling level sensor if a comparison condition is fulfilled.

19. The method according to claim 18,
**characterized in that**
a second reference value is determined.

20. The method according to claim 19,
**characterized in that**
subsequent to comparing the measured value with the first reference value, it is checked whether the rinsing device is activated or deactivated, wherein the measured value is compared with the second reference value if the rinsing device is activated.

21. The method according to any one of the claims 18 to 20,
**characterized in that**
the rinsing device is deactivated if the comparison condition is not fulfilled and either the absolute value of the measured value exceeds the absolute value of the second reference value if the absolute value of the second reference value is greater than or equal to the absolute value of the first reference value, or if the absolute value of the first measured value falls below the absolute value of the second reference value if the absolute value of the second reference value is less than or equal to the absolute value of the first reference value, or if a predetermined interval has elapsed since the activation of the rinsing device.

22. The method according to any one of the claims 18 to 21,
**characterized in that**
the activated rinsing device is deactivated if the control signal output provides a control signal with which the rinsing device is deactivated, of if the control signal output provides no control signal.

## Revendications

1. Appareil de mesure de niveau de remplissage comprenant
- un dispositif de rinçage (13, 15, 17, 19, 21, 23, 25) destiné à rincer un capteur de niveau de remplissage (1),
- un capteur (1) destiné à détecter un signal de mesure,
- un dispositif de détermination de valeur mesurée (5) relié au capteur et destiné à déterminer une valeur mesurée à partir du signal de mesure détecté, ainsi qu'
- un comparateur (7) qui présente une sortie de signal de commande (11) pour
délivrer un signal de commande, dans lequel ledit dispositif de détermination de valeur mesurée est relié au comparateur pour comparer la valeur mesurée déterminée à une première valeur de référence (8) dans une condition de comparaison prédéterminée, dans lequel le capteur est le capteur de niveau de remplissage, le capteur de niveau de remplissage est un capteur pour recevoir et détecter le signal d'écho d'une impulsion haute fréquence, **caractérisé par le fait que** la valeur mesurée est une valeur calculée à partir du signal d'écho détecté, et le dispositif de rinçage est couplé à la sortie de signal de commande, ou est relié à celle-ci, de telle sorte que, lorsque la condition de comparaison prédéterminée est remplie, la sortie de signal de commande transmet au dispositif de rinçage un signal de commande pour activer le dispositif de rinçage de manière à ce que le dispositif de rinçage soit activé et que le capteur de niveau de remplissage soit rincé.

2. Appareil de mesure de niveau de remplissage selon la revendication 1, **caractérisé par le fait que**, lorsque le signal de commande pour activer le dispositif de rinçage est fourni à la sortie de signal de commande, le dispositif de rinçage reste activé pendant une durée prédéterminée.

3. Appareil de mesure de niveau de remplissage selon la revendication 1, **caractérisé par le fait que**, lorsque la condition de comparaison est remplie, une hystérésis est activée de sorte que le dispositif de rinçage reste activé lorsque la valeur mesurée se situe dans une plage d'hystérésis, ladite plage d'hystérésis étant définie par la première valeur de référence et une deuxième valeur de référence (10) qui se situe en dehors de la plage de valeurs dans laquelle la condition de comparaison est remplie.

4. Appareil de mesure de niveau de remplissage selon l'une quelconque des revendications précédentes, **caractérisé par le fait que** la valeur mesurée et/ou la première valeur de référence est fonction du rapport signal/bruit du signal d'écho.

5. Appareil de mesure de niveau de remplissage selon l'une quelconque des revendications précédentes, **caractérisé par le fait que** la première valeur de référence est fonction de l'amplitude de l'impulsion haute fréquence émise.

6. Appareil de mesure de niveau de remplissage selon l'une quelconque des revendications précédentes, **caractérisé par le fait que** la première valeur de référence et/ou la deuxième valeur de référence est déterminée par l'intervalle de temps entre l'impulsion haute fréquence et le signal d'écho.

7. Appareil de mesure de niveau de remplissage selon l'une quelconque des revendications précédentes, **caractérisé par le fait que** la première valeur de référence et/ou la deuxième valeur de référence est déterminée à partir de l'amplitude du signal d'écho reçu, au moment de la mise en service de l'appareil de mesure de niveau de remplissage.

8. Appareil de mesure de niveau de remplissage selon l'une quelconque des revendications précédentes, **caractérisé par le fait que** la première valeur de référence et/ou la deuxième valeur de référence est une valeur déterminée à partir d'une courbe d'écho de référence stockée.

9. Appareil de mesure de niveau de remplissage selon l'une quelconque des revendications précédentes, **caractérisé par le fait que** le fluide est gazeux, de préférence est de l'azote, de l'air ou un gaz rare.

10. Appareil de mesure de niveau de remplissage selon l'une quelconque des revendications précédentes, **caractérisé par le fait que** le fluide est un fluide de refroidissement pour refroidir le capteur de niveau de remplissage, ou un fluide de nettoyage pour nettoyer le capteur de niveau de remplissage.

11. Appareil de mesure de niveau de remplissage selon l'une quelconque des revendications précédentes, **caractérisé par le fait qu'**une soupape de rinçage est intégrée à l'appareil de mesure de niveau de remplissage.

12. Appareil de mesure de niveau de remplissage selon l'une quelconque des revendications précédentes, **caractérisé par le fait que** la sortie de signal de commande est couplée au dispositif de rinçage par une connexion sans fil pour transmettre le signal de commande.

13. Appareil de mesure de niveau de remplissage selon l'une quelconque des revendications précédentes, **caractérisé par le fait que**, lorsque la condition de comparaison est remplie, une pluralité d'intervalles de rinçage sont prévus, dans lequel, de préférence, la durée de chaque intervalle de rinçage individuel et/ou la durée des intervalles de temps entre les intervalles de rinçage est/sont prédéterminée(s).

14. Appareil de mesure de niveau de remplissage selon l'une quelconque des revendications précédentes, **caractérisé par le fait que**, lorsque la condition de comparaison est toujours remplie après un nombre prédéterminé d'intervalles de rinçage ou après une durée de rinçage prédéterminée, le dispositif de rinçage est désactivé et un message d'erreur est délivré.

15. Appareil de mesure de niveau de remplissage selon l'une quelconque des revendications précédentes, **caractérisé par le fait que** des intervalles de rinçage supplémentaires pour le rinçage du capteur de niveau de remplissage sont prévus, la durée du rinçage étant de préférence prédéterminée.

16. Appareil de mesure de niveau de remplissage selon l'une quelconque des revendications précédentes, **caractérisé par le fait que** l'appareil de mesure de niveau de remplissage comprend une sortie pour faire sortir une erreur et par laquelle un signal d'erreur peut être délivré qui indique un nettoyage ou un refroidissement requis du capteur de niveau de remplissage.

17. Appareil de mesure de niveau de remplissage selon la revendication 16, **caractérisé par le fait que** le signal d'erreur est utilisé en tant que signal de commande pour activer le dispositif de rinçage.

18. Procédé de rinçage d'un capteur de niveau de remplissage comprenant un appareil de mesure de niveau de remplissage selon l'une quelconque des revendications précédentes, **caractérisé par le fait que** les étapes de procédé suivantes sont mises en œuvre:
a) prédéterminer une première valeur de référence,
b) mesurer un signal au moyen d'un capteur,
c) déterminer une valeur mesurée à partir du signal,
d) comparer la valeur mesurée à la première valeur de référence,
e) rincer le capteur de niveau de remplissage lorsqu'une condition de comparaison est remplie.

19. Procédé selon la revendication 18, **caractérisé par le fait qu'**une deuxième valeur de référence est déterminée.

20. Procédé selon la revendication 19, **caractérisé par le fait que**, après avoir comparé la valeur mesurée à la première valeur de référence, on vérifie si le dispositif de rinçage est activé ou désactivé, dans lequel, lorsque le dispositif de rinçage est activé, la valeur mesurée est comparée à la deuxième valeur de référence.

21. Procédé selon l'une quelconque des revendications 18 à 20, **caractérisé par le fait que** le dispositif de rinçage est désactivé lorsque la condition de comparaison n'est pas remplie et que soit la valeur de la valeur mesurée dépasse la valeur de la deuxième valeur de référence si la valeur de la deuxième valeur de référence est supérieure ou égale à la valeur de la première valeur de référence, ou que la valeur de la première valeur mesurée reste inférieure à la valeur de la deuxième valeur de référence si la valeur de la deuxième valeur de référence est inférieure ou égale à la valeur de la première valeur de référence, ou lorsqu'un intervalle de temps prédéterminé s'est écoulé depuis l'activation du dispositif de rinçage.

22. Procédé selon l'une quelconque des revendications 18 à 21, **caractérisé par le fait que** le dispositif de rinçage activé est désactivé lorsque la sortie de signal de commande fournit un signal de commande avec lequel le dispositif de rinçage est désactivé, ou lorsque la sortie de signal de commande ne fournit pas de signal de commande.
